# EUROPÄISCHE PATENTSCHRIFT

(11) **EP 2 153 096 B1**
(45) Veröffentlichungstag und Bekanntmachung des Hinweises auf die Patenterteilung: **22.02.2012**
(21) Anmeldenummer: 08707496.9
(22) Anmeldetag: 01.02.2008
(51) Int. Cl.: F16K 27/00, F16K 31/42

(54) **VENTILEINRICHTUNG MIT HANDHILFSBETÄTIGUNGSEINRICHTUNG**
VALVE DEVICE HAVING MANUAL BACKUP ACTUATING DEVICE
SYSTÈME DE SOUPAPE COMPORTANT UN DISPOSITIF D'ACTIONNEMENT AUXILIAIRE MANUEL

(43) Veröffentlichungstag der Anmeldung: 17.02.2010
(73) Patentinhaber: FESTO AG & Co. KG, 73734 Esslingen (DE)
(72) Erfinder: MACK, Reinhold, 73773 Aichwald (DE)
(74) Vertreter: Vogler, Bernd
(86) Internationale Anmeldenummer: PCT/EP2008/000810
(87) Internationale Veröffentlichungsnummer: WO 2009/095038

(56) Entgegenhaltungen:
- EP-A- 0 800 001
- EP-A- 1 048 854
- DE-U1-202005 014 397
- GB-A- 948 174
- US-A- 5 615 710
- US-A- 5 819 788
- US-A1- 2004 003 850

## Beschreibung

Die Erfindung betrifft eine Ventileinrichtung, mit wenigstens einem Grundkörper mit wenigstens einer Aufnahme, in der eine Handhilfsbetätigungseinrichtung angeordnet ist, die ein Hilfsventil mit einem in die Aufnahme eingesetzten Ventilgehäuse und wenigstens einem im Ventilgehäuse gelagerten Hilfsventilglied sowie ein mit dem Hilfsventilglied in Antriebsverbindung stehendes, manuell betätigbares Betätigungsglied aufweist, wobei das Hilfsventilglied mittels des Betätigungsgliedes zwischen einer Grundstellung und einer ein zugeordnetes Hauptventil unter Umgehung eines dem Hauptventil zugeordneten Vorsteuerventils mit Druckfluid beaufschlagenen Arbeitsstellung umschaltbar ist, wobei das Betätigungsglied unter Bildung einer mit dem Hilfsventil einheitlich montierbaren Baueinheit am Grundkörper angeordnet ist, wobei das Betätigungsglied von einem Betätigungsschieber gebildet ist, der mittels Führungsmitteln zwischen einer mit der Grundstellung des Hilfsventilglieds korrespondierenden ersten Schaltstellung und einer mit der Arbeitsstellung des Hilfsventilglieds korrespondierenden zweiten Schaltstellung linear beweglich am Ventilgehäuse geführt ist, wobei das Betätigungsglied Beaufschlagungsmittel aufweist, die bei der Überführung zwischen den beiden Schaltstellungen das Hilfsventilglied veranlassen zwischen der Grundstellung und der Arbeitsstellung zu schalten.

In der GB 948,174 ist ein Fluidsteuerventil offenbart, mit einem Hauptventil und einem elektromagnetischen Vorsteuerventil zur Ansteuerung des Hauptventils. Ferner ist eine Handhilfsbetätigungseinrichtung erwähnt, die ein Hilfsventil besitzt. Das mit einem Außengewinde versehene Anschlussstück und der als Betätigungsglied ausgebildete Knauf bilden eine einheitlich montierbare Baugruppe aus Betätigungsglied und Hilfsventil.

Die US 5,615,710 A offenbart ebenfalls eine Handhilfsbetätigungseinrichtung, dessen Betätigungsglied unter Bildung einer mit dem Hilfsventil einheitlich montierbaren Baueinheit am Ventilgehäuse angeordnet ist.

Aus der DE 20 2005 014 397 U1 ist ebenfalls eine Ventileinrichtung bekannt, mit einem Hauptventil, dessen Hauptventilglied durch wenigstens ein elektrisch betätigbares Vorsteuerventil ansteuerbar ist. Ferner ist eine ohne Beeinflussung des Schaltzustandes des Vorsteuerventils betätigbare Handhilfsbetätigungseinrichtung vorgesehen, die bei deaktiviertem Vorsteuerventil manuell aus einer Grundstellung in eine Arbeitsstellung schaltbar ist, in der sie eine das Vorsteuerventil umgehende Hilfs-Fluidverbindung freigibt, woraus eine Fluidbeaufschlagung des Hauptventilgliedes resultiert. Das Hilfsventil befindet sich in einer Gehäuseausnehmung einer sogenannten Vorsteuerstufe, wobei ein Ventilgehäuse vorgesehen ist, in dem das Hilfsventilglied linear verschiebbar geführt ist. Ferner ist ein Betätigungsglied vorgesehen, das von außerhalb der Vorsteuerstufe zugänglich ist und sich durch manuelle Beaufschlagung betätigen lässt, um das Hilfsventilglied in zwei verschiedene Schaltstellungen zu positionieren. Das Betätigungsglied ist wippenartig ausgestaltet und um eine Drehachse verschwenkbar am Gehäuse der Vorsteuerstufe gelagert.

Ein Austausch des Hilfsventils ist nicht ohne weiteres möglich, da das Betätigungsglied separat am Gehäuse der Vorsteuerstufe montiert ist und zunächst demontiert werden muss, damit das Hilfsventilglied ausgetauscht werden kann.

Aufgabe der Erfindung ist es, eine Ventileinrichtung der eingangs erwähnten Art zu schaffen, die eine Handhilfsbetätigungseinrichtung aufweist, die einfach und schnell montierbar und universell an verschiedenen Grundkörpern der Ventileinrichtung einsetzbar ist.

Diese Aufgabe wird durch eine Ventileinrichtung mit den Merkmalen des unabhängigen Anspruches 1 gelöst. Weiterbildungen der Erfindung sind in den Unteransprüchen dargestellt.

Die erfindungsgemäße Ventileinrichtung zeichnet sich dadurch aus, dass die Beaufschlagungsmittel eine Schrägfläche aufweisen, die sich in einer ersten Schaltrichtung von der ersten Schaltstellung in die zweite Schaltstellung des Betätigungsgliedes vom Ventilgehäuse weg neigt, derart, dass das Hilfsventilglied beim Schalten des Betätigungsgliedes in die Arbeitsstellung geschaltet wird.

Das Betätigungsglied ist also nicht am Grundkörper befestigt, sondern befindet sich wie das Hilfsventilglied am Ventilgehäuse des Hilfsventils. Somit bilden Ventilgehäuse, Hilfsventilglied und Betätigungsglied eine Baueinheit, die in einfacher Weise in die Aufnahme am Grundkörper einsetzbar und dort befestigbar ist. Es liegt also eine sämtliche Komponenten des Hilfsventils umfassendes Modul vor, das sich bei Bedarf einfach und schnell austauschen lässt. Ferner ist es möglich, das Modul in einfacher Weise an unterschiedlichen Grundkörpern der Ventileinrichtung einzusetzen. Als Grundkörper ist vorzugsweise eine ein Hauptventil aufnehmende Grundplatte bzw. Ventilscheibe vorgesehen. Es ist also möglich, die Handhilfsbetätigungseinrichtung in eine solche Grundplatte zu integrieren. Bei der vorstehend erwähnten, aus dem Stand der Technik bekannten Ventileinrichtung sitzt die Handhilfsbetätigungseinrichtung im Gegensatz hierzu nämlich am Vorsteuerventil. Prinzipiell ist es jedoch auch möglich, als Grundkörper ein Gehäuse eines Vorsteuerventils vorzusehen.

Bei einer Weiterbildung der Erfindung weist das Ventilgehäuse wenigstens eine umfangsseitig von einer Ventilgehäusewand begrenzte längliche Gehäuseausnehmung mit einer Ausnehmungslängsachse auf, in der Hilfsventilglied linear beweglich geführt ist, wobei in die Gehäuseausnehmung mehrere quer zur Ausnehmungslängsachse im Ventilgehäuse ausgebildete Fluidkanalabschnitte münden, die andererseits mittels Austrittsmündungen im Gehäuse außenseitig ausmünden und jeweils mit im Grundkörper ausgebildeten Fluidkanälen korrespondieren. Es ist also möglich, im Einbauzustand der Ventileinrichtung im Wesentlichen senkrecht im Grundkörper verlaufende Fluidkanäle mittels des Hilfsventils miteinander zu verschalten. Die Fluidkanäle müssen also nicht mehr wie seither aus der Stirnseite des Grundkörpers herausgeführt werden, wo sie dann mit korrespondierenden Kanälen im Vorsteuerventil verbunden werden können.

Bei einer Weiterbildung der Erfindung liegen die Austrittsmündungen der Fluidkanalabschnitte an verschiedenen Gehäuseseiten des Ventilgehäuses, wobei der Übergang zwischen den Austrittsmündungen und den grundkörperseitigen Fluidkanälenmittels insbesondere als separate Bauteile ausgebildeten Dichtungen abgedichtet ist. Zur Abdichtung können also mehrere Dichtebenen, beispielsweise zwei oder drei Dichtebenen, vorgesehen sein.

In besonders bevorzugter Weise weist das Ventilgehäuse eine weitere längliche Gehäuseausnehmung auf, in die ebenfalls im Ventilgehäuse ausgebildete Fluidkanalabschnitte einmünden, wobei in den beiden Gehäuseausnehmungen wahlweise jeweils ein Hilfsventilglied zum Einsatz an einem doppelseitig angesteuerten Hauptventil oder ein Hilfsventilglied und ein Blindglied zum Einsatz an einem einseitig angesteuerten Hauptventil eingesetzt ist. Durch die beiden Gehäuseausnehmungen lässt sich die Handhilfsbetätigungseinrichtung also ganz flexibel bei unterschiedlich angesteuerten Hauptventilen einsetzen.

Zweckmäßigerweise ist das Hilfsventilglied stößelartig ausgestaltet, mit einem Betätigungsabschnitt, der über eine Austrittsöffnung aus dem Ventilgehäuse herausragt und dort über eine dem Hilfsventilglied zugeordnete Rückstoßfeder in dieser Position gehalten ist, wobei das Betätigungsglied zum Schalten des Hilfsventilglieds in die Arbeitsstellung an den Betätigungsabschnitt angreift und diesen gegen die Kraft der Rückstellfeder nach innen drückt.

Damit der Betätigungsschieber in etwa bündig mit dem Ventilgehäuse abschließt, kann dieser verschieblich in einer im Ventilgehäuse ausgebildeten Lagerausnehmung angeordnet sein.

In besonders bevorzugter Weise verbreitert sich die Aufnahme im Grundkörper in Richtung einer Stirnseite des Grundkörpers keilartig, wobei das Ventilgehäuse korrespondierend hierzu keilartig ausgestaltet ist. Dadurch wird verhindert, dass die Dichtungen beim Einsetzen des Ventilgehäuses in die Aufnahmen beschädigt werden. Ferner werden die zweckmäßigerweise in verschiedenen Ebenen liegenden Dichtungen beim Befestigen des Ventilgehäuses am Grundkörper verspannt.

Bei einer Weiterbildung der Erfindung weist das Ventilgehäuse einen in die Aufnahme am Grundkörper eingesetzten, das Hilfsventilglied aufweisende Basisabschnitt und einen quer zu einen einer Einsetzrichtung in die Aufnahme verlaufenden, an den Basisabschnitt angesetzten Blendenabschnitt auf, der an der Stirnseite des Grundkörpers in Anlage ist.

Ein bevorzugtes Ausführungsbeispiel der Erfindung ist in der Zeichnung dargestellt und wird im Folgenden näher erläutert. In der Zeichnung zeigen:

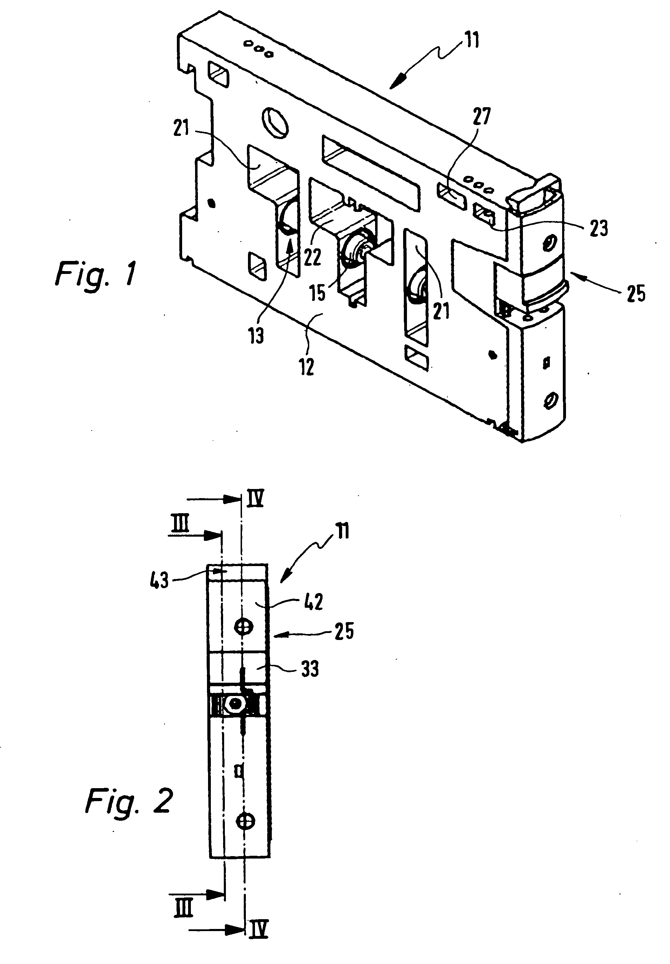

- Figur 1: eine perspektivische Darstellung eines bevorzugten Ausführungsbeispiels der erfindungsgemäßen Ventileinrichtung, die mit einer Handhilfsbetätigungseinrichtung ausgestattet ist,
- Figur 2: eine Vorderansicht der Ventileinrichtung von Figur 1,
- Figur 3: einen Längsschnitt durch die Ventileinrichtung von Figur 1 gemäß Schnittlinie III-III aus Figur 2,
- Figur 4: einen Längsschnitt durch die Ventileinrichtung von Figur 1 gemäß Schnittlinie IV-IV aus Figur 2,
- Figur 5: eine vergrößerte Darstellung der Einzelheit X von Figur 3 und
- Figur 6: eine vergrößerte Darstellung der Einzelheit Y von Figur 4.

Aus der Zeichnung geht eine insgesamt mit Bezugsziffer 11 bezeichnete Ventileinrichtung hervor, die im Wesentlichen plattenförmig gestaltet ist und die mit weiteren plattenförmigen Ventileinrichtungen 11 zu einer Ventilbaugruppe zusammengefasst werden kann. Innerhalb der Ventilbaugruppe sind die Ventileinrichtungen in einer Aufreihungsrichtung Seite an Seite aufeinander folgend angeordnet, wobei ihre Hauptausdehnungsebenen parallel zueinander verlaufen.

Die Ventileinrichtung 11 enthält einen die Hauptausdehnungsebene vorgegebenen plattenförmige Grundkörper 12, der mehrteilig aufgebaut sein kann, bei dem bevorzugten Ausführungsbeispiel jedoch in einer einteilige Ausführungsform dargestellt ist. In den Grundkörper 12 ist ein Hauptventil 13 inintegriert, das gemäß bevorzugtem Ausführungsbeispiel durch ein einzelnes Vorsteuerventil 70 angesteuert wird.

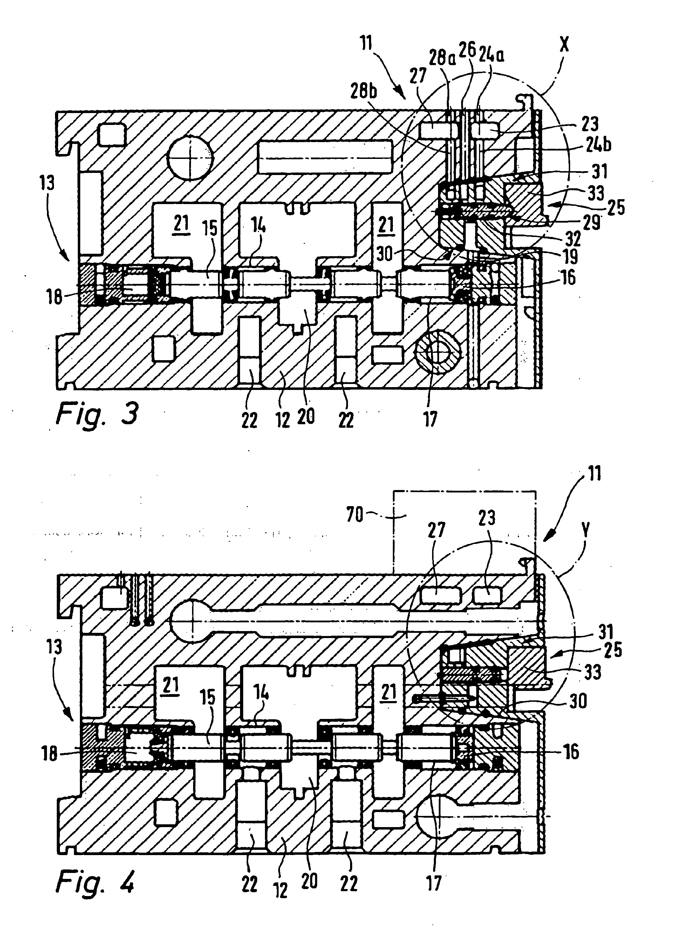

Das Hauptventil 13 enthält eine sich in der Hauptausdehnungsebene erstreckende Schieberaufnahme 14 in der ein Ventilschieber 15 beweglich aufgenommen ist. Wie beispielhaft in den Figuren 3 und 4 dargestellt, besitzt der Ventilschieber 15 einenends einen mittels Fluiddruck beaufschlagbaren Antriebskolben 16, der in einer Arbeitskammer 17, die von einem Teil der Schieberaufnahme 14 gebildet wird, linear beweglich geführt ist. Gemäß bevorzugten Ausführungsbeispiel wird der Ventilschieber 15 anderenends durch eine Luftfeder 18 beaufschlagt, die eine Rückstellung des Ventilschiebers 15 bewirkt, falls der Antriebskolben 16 mit einem gegenüber der Luftfeder geringeren Fluiddruck beaufschlagt ist. Wie erwähnt ist es selbstverständlich auch möglich, ein doppelseitig angesteuertes Hauptventil vorzusehen, bei dem dann beidenends jeweils ein Antriebskolben vorgesehen ist, wobei dann wahlweise der eine oder der andere Antriebskolben mit Fluiddruck beaufschlagt wird.

Wie insbesondere in Figur 3 dargestellt, mündet in die Arbeitskammer 17 ein Vorsteuerkanal 19 ein, über die der Antriebskolben 16 mit einem Steuerfluid beaufschlagbar ist, um ihn entgegen der Federkraft der Luftfeder in eine zweite, nicht dargestellte Schaltstellung umzuschalten.

Die Schieberaufnahme 14 kommuniziert mit einem Speisekanal 20 und zwei Abführkanälen 21, sowie ferner mit zwei Arbeitskanälen 22. Je nach Schaltstellung des Hauptventilschiebers 15 ist der eine Arbeitskanal 22 mit dem Speisekanal 20 verbunden, während der jeweils andere Arbeitskanal 22 gleichzeitig mit einem der Abführkanäle 21 in Verbindung steht. Auf diese Weise kann ein an die Arbeitskanäle 22 angeschlossener Verbraucher, beispielsweise ein fluidisch betätigbarer Antrieb, betätigt werden.

Der Speisekanal 20 steht mit einer Druckquelle in Verbindung, die Abführkanäle 21 mit einer Drucksenke, insbesondere mit der Atmosphäre. Der Speisekanal 20 und die Abführkanäle 21 sind insbesondere als den Grundkörper 12 in der Aufreihungsrichtung durchsetzende Kanäle ausgebildet, so dass sie an den beiden in der Aufreihungsrichtung orientierten großflächigen Seitenflächen des Grundkörpers 12 ausmünden. In dem die angesetzten weiteren Ventileinrichtungen 11 entsprechende Durchgangskanäle aufweisen, können die Ventilbaugruppe in der Aufreihungsrichtung durchziehende Kanalsysteme realisiert werden, die eine gemeinsame Fluidversorgung und Fluidabfuhr bezüglich sämtlicher Ventileinrichtungen 11 ermöglichen.

Die Arbeitskanäle 22 sind für jede Ventileinrichtung 11 individuell vorgesehen und münden an einer der Schmalseiten des Grundkörpers 12 aus, exemplarisch an der Unterseite.

Das Vorsteuerventil 70 kann als elektrisch ansteuerbares bzw. betätigbares Ventil ausgebildet sein. Es kann elektrische Betätigungssignale über Schnittstellenmittel von mindestens einer nicht weiter dargestellten elektronischen Steuereinrichtung, die extern angeordnet oder in die Ventilbaugruppe integriert sein kann, empfangen. Zweckmäßigerweise handelt es sich bei dem Vorsteuerventil 70 um ein Magnetventil oder um ein Piezoventil.

Vorzugsweise ist das Vorsteuerventil 70 als 3/2-Wegeventil ausgeführt. Es ist hierzu ein im Grundkörper 12 ausgebildeter Vorsteuer-Speisekanal 23 vorgesehen, der ebenfalls als in Aufreihungsrichtung den Grundkörper durchsetzenden Kanal ausgebildet ist. Vom Vorsteuer-Speisekanal 23 gehen ein erster und ein zweiter Vorsteuer-Abzweigkanal 24a, 24b ab, die jeweils in der Ebene der großflächigen Seitenfläche des Grundkörpers 12 verlaufen. Der erste Vorsteuer-Abzweigkanal 24a führt vom Vorsteuer-Speisekanal 23 zum Vorsteuerventil, während der zweite Vorsteuer-Abzweigkanal 24b vom Vorsteuer-Speisekanal 23 zu einer Handhilfsbetätigungseinrichtung 25 führt, die nachfolgend näher beschrieben wird. Ferner ist noch ein Vorsteuer-Arbeitskanal 26 vorgesehen, der vom Arbeitsausgang des Vorsteuerventils zur Handhilfsbetätigungseinrichtung 25 führt. Auch dieser Vorsteuer-Arbeitskanal 26 verläuft in der Ebene der großflächigen Seitenfläche des Grundkörpers 12. Schließlich ist noch ein Vorsteuer-Abführkanal 27 vorgesehen, der wie der Vorsteuer-Speisekanal 23 den Grundkörper 12 in Aufreihungsrichtung durchsetzt. Vom Vorsteuer-Abführkanal 27 gehen ein erster und ein zweiter Vorsteuer-Abführkanalabzweig 28a, 28b ab, wobei der erste Vorsteuer-Abführkanalabzweig 28a vom Vorsteuerventil in den Vorsteuer-Abführkanal 27 und der zweite Vorsteuer-Abführkanalabzweig 28b von der Handhilfsbetätigungseinrichtung 25 in den Vorsteuer-Abführkanal 27 mündet.

Die Ventileinrichtung 11 besitzt ferner die vorstehend bereits erwähnte Handhilfsbetätigungseinrichtung 25, die ein Hilfsventil 29 mit einem in eine Aufnahme 30 am Grundkörper 12 eingesetzten Ventilgehäuse 31 und wenigstens einem im Ventilgehäuse 31 gelagerten Hilfsventilglied 32 sowie ein mit dem Hilfsventilglied 32 in Antriebsverbindung stehendes, manuell betätigbares Betätigungsglieds 33 aufweist.

Das Ventilgehäuse 31 weist gemäß bevorzugtem Ausführungsbeispiel zwei umfangsseitig von einer Ventilgehäusewand begrenzte längliche Gehäuseausnehmungen 34a, 34b mit einer Ausnehmungslängsachse 35a, 35b auf. In einem der beiden Gehäuseausnehmungen 34a, 34b ist ein Hilfsventilglied 32 linear beweglich geführt.

Wie insbesondere in den Figuren 3 und 4 dargestellt, münden in die Gehäuseausnehmungen 34a, 34b jeweils mehrere quer zur Ausnehmungslängsachse 35a, 35b im Ventilgehäuse 31 verlaufende Fluidkanalabschnitte. Zu den Fluidkanalabschnitten gehören ein Hilfskanalabschnitt 37, der mit dem zweiten Vorsteuer-Abzweigkanal im Grundkörper 12 korrespondiert, ein mit dem Vorsteuer-Arbeitskanal 26 korrespondierender Arbeitskanalabschnitt 38, ein mit dem zweiten Vorsteuer-Abführkanalabzweig 28b korrespondierender Abführkanalabschnitt 39 sowie ein Auslasskanalabschnitt 40, der mit dem Vorsteuerkanal 19 korrespondiert.

Das Ventilgehäuse 31 besitzt einen in die Aufnahme 30 am Grundkörper 12 eingesetzten, das Hilfsventilglied 32 aufweisenden Basisabschnitt 41 und einen quer zu einer Einsetzrichtung in die Aufnahme 30 verlaufenden, an den Basisabschnitt 41 angesetzten Blendenabschnitt 42, der an der Stirnseite 43 des Grundkörpers 12 in Anlage ist. Basisabschnitt 41 und Blendenabschnitt 42 sind zweckmäßigerweise einstückig miteinander verbunden. Das Ventilgehäuse 31 kann aus Kunststoff oder Metall bestehen. Beispielsweise kann es sich bei dem Ventilgehäuse 31 um ein Kunststoffspritzgießteil handeln.

Die Aufnahme 30, in der das Ventilgehäuse 31 eingesetzt ist, verbreitert sich in Richtung der Stirnseite 43 des Grundkörpers 12 keilartig, wobei der Basisabschnitt 41 des Ventilgehäuses 31 korrespondierend hierzu keilartig ausgestaltet ist. Hierzu besitzt der Basisabschnitt 41 schräg verlaufende Seitenflächen 44a, 44b, die im eingesetzten Zustand des Ventilgehäuses 31 in Anlage mit dementsprechend schräg ausgebildeten Innenflächen 45a, 45b der Aufnahme 30 in Anlage gehalten sind. Ferner besitzt das Ventilgehäuse 31 eine Rückseite 46, die einer Bodenfläche 47 der Aufnahme 30 zugewandt ist, insbesondere dort ebenfalls in Anlage ist.

Wie insbesondere in Figur 3 dargestellt, münden die grundkörperseitigen Fluidkanäle 19, 24a, 24b, 26, 28a, 28b an den Innenflächen 45a, 45b der Aufnahme 30. Die ventilgehäuseseitigen Fluidkanalabschnitte 37, 38, 39 und 40 hingegen münden an den Seitenflächen 44a, 44b des Ventilgehäuses 31. Mithin ist es notwendig, die Übergänge zwischen den grundkörperseitigen Fluidkanälen und den ventilgehäuseseitigen Fluidkanalabschnitten abzudichten. Die paarweise gegenüberliegenden Seitenflächen des Ventilgehäuses 31 und die Innenflächen 45a, 45b der Aufnahme 30 stellen mithin zwei verschiedene Dichtebenen dar.

Wie insbesondere in Figur 4 dargestellt, besitzt das Ventilgehäuse 31 ferner einen an der Rückseite 46 des Ventilgehäuses 31 ausmündenden Verbindungskanalabschnitt 48, der mit einem im Grundkörper 12 ausgebildeten Verbindungskanal 49 korrespondiert. Verbindungskanalabschnitt 48 und Verbindungskanal 49 sind in Funktion, falls ein zweites Vorsteuerventil vorgesehen ist, das ebenfalls über die Handhilfsbetätigungseinrichtung 25 geschaltet ist. Mithin bildet auch die Rückseite 46 und die gegenüberliegende Bodenfläche 47 eine Dichtebene. Die Abdichtung der Übergänge zwischen den grundkörperseitigen Fluidkanälen und den ventilgehäuseseitigen Fluidkanalabschnitten erfolgt zweckmäßigerweise über separate Dichtelemente, beispielsweise gummielastische Dichteinsätze bzw. Dichtringe.

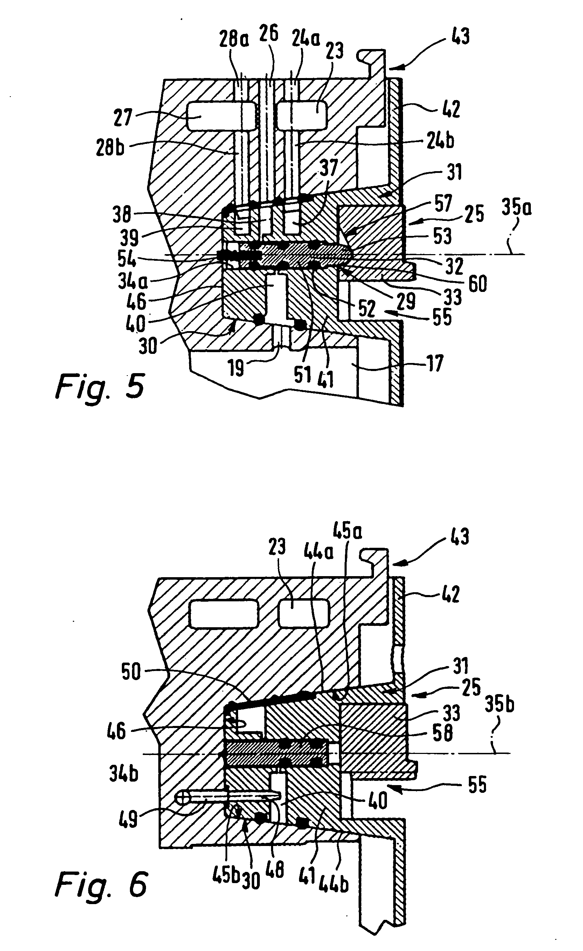

Wie in Figur 5 dargestellt, befinden sich in der ersten Gehäuseausnehmung 34a das Hilfsventilglied 32, das stößelartig ausgestaltet ist. Es besitzt einen zylindrischen Basisabschnitt 51, an dem umfangsseitig Dichtringe 52 festgelegt sind. Der Basisabschnitt 51 ist mit einem Betätigungsabschnitt 53 verbunden. Das Hilfsventilglied 32 wird durch eine Rückstellfeder 54 in der in Figur 5 gezeigten Grundstellung gehalten, wobei der Betätigungsabschnitt 43 über eine Austrittsöffnung 60 in eine Lagerausnehmung 55 am Ventilgehäuse 31 hineinragt.

In der Lagerausnehmung 55 befindet sich ein Betätigungsglied 33 in Form eines Betätigungsschiebers, der mittels Führungsmitteln zwischen einer mit der Grundstellung des Hilfsventils 29 korrespondierten ersten Schaltstellung und einer mit der Arbeitsstellung des Hilfsventilglieds korrespondierenden zweiten Schaltstellung linear beweglich am Ventilgehäuse 31 geführt ist. Das Betätigungsglied 33 weist Beaufschlagungsmittel 57 auf, die in Wirkverbindung mit dem Betätigungsabschnitt 53 des Hilfsventilglieds 32 stehen. Die Beaufschlagungsmittel 57 umfassen hierzu eine Schrägfläche, die sich in einer ersten Schaltrichtung von der ersten Schaltstellung in die zweite Schaltstellung des Betätigungsgliedes 33 vom Ventilgehäuse 31 weg neigt, derart, dass das Hilfsventilglied 32 beim Schalten des Betätigungsgliedes 46 in die zweite Schaltstellung in die Arbeitsstellung geschaltet wird.

Wie insbesondere in Figur 6 dargestellt, ist in der parallel zur ersten Gehäuseausnehmung 34a liegenden zweiten Gehäuseausnehmung 34b statt eines weiteren Hilfsventilgliedes ein Blindglied 58 angeordnet, wodurch eine Fluidverbindung zwischen den in die zweite Gehäuseausnehmung 34b einmündenden Fluidkanalabschnitten und dem Verbindungskanal 49 unterbunden ist.

Bei der Montage der Handhilfsbetätigungseinrichtung 25 wird der keilartige Basisabschnitt 41 des Ventilgehäuses 31 in die Aufnahme 30 am Grundkörper 12 eingesetzt. Die Dichtelemente 50 wurden zuvor schon an den Seitenflächen 44a, 44b sowie an der Rückseite 46 des Basisabschnitts 41 festgelegt. Durch die sich keilartige zur Stirnseite 43 verbreiternde Aufnahme 30 ist gewährleistet, dass die Dichtelemente 50 bei der Montage nicht beschädigt werden. Das Betätigungsglied 33 befindet sich bereits am Ventilgehäuse 31 in seiner Lagerausnehmung 55 und bildet mit dem Hilfsventil 29 eine Baueinheit, wodurch ein einfach und schnell zu montierendes Handhilfsmodul mit sämtlichen Komponenten der Handhilfsbetätigungseinrichtung 25 vorlegt. Zur Befestigung des Ventilgehäuses 31 dient ein durch den Basisabschnitt 41 hindurchgehendes Befestigungsloch, durch das ein Befestigungselement, vorzugsweise Befestigungsschraube, hindurchführbar ist, die dann mit dem Grundkörper 12 verbunden wird. Dabei werden die in den verschiedenen Dichtebenen liegenden Dichtelemente 50 verspannt.

Im normalen Betrieb wird die Ventileinrichtung 11 nicht manuell angesteuert, sondern auf der Basis von Steuersignalen, die von einer elektronischen Steuereinrichtung generiert werden. Beim Einrichten einer durch die Ventileinrichtung 11 zu betätigenden Maschine oder in Verbindung mit Reparatur- oder Wartungsarbeiten ist jedoch oftmals eine Betätigungsmöglichkeit für das Hauptventil 13 gewünscht, die von den nicht manuellen, regulären Ansteuerungsmaßnahmen unabhängig ist. Zu diesem Zweck ist die Handhilfsbetätigungseinrichtung 25 vorgesehen.

Im Normalbetrieb gelangt Druckmedium, bei dem es sich vorzugsweise um Druckluft handelt, zum Zwecke der Vorsteuerung des Hauptventils 13 über den Vorsteuer-Speisekanal 23, den ersten Vorsteuer-Abzweigkanal 24a zum Vorsteuerventil 70 und wird dort durch dementsprechende Ansteuerung des Vorsteuerventils 70 über den Vorsteuer-Arbeitskanal 26 zur Handhilfsbetätigungseinrichtung 25 geführt.

Im Normalbetrieb hat das Hilfsventilglied 32 des Hilfsventils 29 seine Grundstellung eingenommen, wodurch Druckmedium über den Arbeitskanalabschnitt 38 zum Auslasskanalabschnitt 40 und von dort in den Vorsteuerkanal 19 gelangt. Von dort gelangt Druckmedium in die Arbeitskammer 17, wodurch der Antriebskolben 16 gegen die Federkraft der am anderen Ende des Ventilschiebers 15 angeordneten Luftfeder bewegt wird und ein Schaltvorgang ausgelöst wird.

Bei der manuellen Ansteuerungsmaßnahme mittels Handhilfsbetätigungseinrichtung 25 wird das Betätigungsglied 56 von seiner in Figur 5 dargestellten ersten Schaltstellung in eine zweite Schaltstellung per manueller Handhabe verschoben. Hierbei wandert die Schrägfläche der Beaufschlagungsmittel 47 am Betätigungsglied 33 am Betätigungsabschnitt 53 des Hilfsventilglieds 32 entlang, wodurch das Hilfsventilglied 32 entgegen der Federkraft der Rückstellfeder 60 in seine Arbeitsstellung gedrückt wird. Dabei entweicht an der Rückseite des Hilfsventilglieds 32 vorhandene Luft über den zweiten Vorsteuer-Abführkanalabzweig 28b in den Vorsteuer-Abführkanal 27 und von dort in eine Drucksenke, insbesondere in die Umgebung. Ferner wird der Fluiddurchgang zwischen dem Arbeitskanalabschnitt 39 und dem Auslasskanalabschnitt 40 gesperrt. Da das Vorsteuerventil nicht aktiv ist, kann auch kein Druckmedium, das vom Vorsteuer-Speisekanal 23 stammt, über den ersten Vorsteuer-Abzweigkanal 24a und das Vorsteuerventil in den Vorsteuer-Arbeitskanal 26 gelangen. Es gelangt jedoch Druckmedium über den zweiten Vorsteuerabzweigkanal 24b in den Hilfskanalabschnitt 37 und von dort über die nunmehr in der Arbeitsstellung freigegebene Verbindung zum Auslasskanalabschnitt 40 und von dort in den Vorsteuerkanal 19. Von dort aus gelangt Druckmedium wieder in die Arbeitskammer 17, wodurch der Antriebskolben 16 mit Druckmedium beaufschlagt wird. Es ist also möglich, einen Schaltvorgang des Hauptventils 13 unter Umgehung des Vorsteuerventils einzuleiten.

Bei einem nicht dargestellten Ausführungsbeispiel sind in beiden Gehäuseausnehmungen 34a, 34b Hilfsventilglieder eingesetzt. In diesem Fall ist ein zweigeteiltes Betätigungsglied vorgesehen, wobei ein Abschnitt dem einen Hilfsventilglied und ein anderer Abschnitt unabhängig davon dem anderen Hilfsventilglied zugeordnet ist. Dadurch lassen sich die Hilfsventilglieder unabhängig voneinander schalten, wodurch dann auch über den Verbindungskanalabschnitt 48 und den Verbindungskanal 49 Druckmedium zur anderen Antriebsseite des Ventilschiebers 15 gelangen kann.

## Patentansprüche

1. Ventileinrichtung, mit wenigstens einem Grundkörper (12) mit wenigstens einer Aufnahme (30), in der eine Handhilfsbetätigungseinrichtung (25) angeordnet ist, die ein Hilfsventil (29) mit einem in die Aufnahme (30) eingesetzten Ventilgehäuse (31) und wenigstens einen im Ventilgehäuse (31) gelagerten Hilfsventilglied (32) sowie ein mit dem Hilfsventilglied (32) in Antriebsverbindung stehendes, manuell betätigbares Betätigungsglied (33) aufweist, wobei das Hilfsventilglied (32) mittels des Betätigungsgliedes (33) zwischen einer Grundstellung und einer ein zugeordnetes Hauptventil (13) unter Umgehung eines dem Hauptventil (13) zugeordneten Vorsteuerventils (70) mit Druckmedium beaufschlagenden Arbeitsstellung umschaltbar ist, wobei das Betätigungsglied (33) unter Bildung einer mit dem Hilfsventil (29) einheitlich montierbaren Baueinheit am Grundkörper (12) angeordnet ist, wobei das Betätigungsglied (33) von einem Betätigungsschieber gebildet ist, der mittels Führungsmitteln zwischen einer mit der Grundstellung des Hilfsventilglieds (32) korrespondierenden ersten Schaltstellung und einer mit der Arbeitsstellung des Hilfsventilglieds (32) korrespondierenden zweiten Schaltstellung linear beweglich am Ventilgehäuse (31) geführt ist, wobei das Betätigungsglied (33) Beaufschlagungsmittel (57) aufweist, die bei der Überführung zwischen den beiden Schaltstellungen das Hilfsventilglied (32) veranlassen zwischen der Grundstellung und der Arbeitsstellung zu schalten,
**dadurch gekennzeichnet, dass** die Beaufschlagungsmittel (57) eine Schrägfläche aufweisen, die sich in einer ersten Schaltrichtung von der ersten Schaltstellung in die zweite Schaltstellung des Betätigungsgliedes (33) vom Ventilgehäuse (31) weg neigt derart, dass das Hilfsventilglied (32) beim Schalten des Betätigungsgliedes (33) in die zweite Schaltstellung in die Arbeitsstellung geschaltet wird.

2. Ventileinrichtung nach Anspruch 1, **dadurch gekennzeichnet, dass** das Ventilgehäuse (31) wenigstens eine umfangsseitig von einer Ventilgehäusewand begrenzte längliche Gehäuseausnehmung (34a, 34b) mit einer Ausnehmungslängsachse (35a, 35b) aufweist, in der das Hilfsventilglied (32) linear beweglich geführt ist, wobei in die Gehäuseausnehmung (34a, 34b) mehrere quer zur Ausnehmungslängsachse (35a, 35b) im Ventilgehäuse (31) ausgebildete Fluidkanalabschnitte (37, 38, 39, 40) münden, die andererseits mittels Austrittsmündungen gehäuseaußenseitig ausmünden und jeweils mit im Grundkörper (12) ausgebildeten Fluidkanälen (19, 24b, 26, 28b) korrespondieren.

3. Ventileinrichtung nach Anspruch 2, **dadurch gekennzeichnet, dass** die Austrittsmündungen der Fluidkanalabschnitte (37, 38, 39, 40, 48) an verschiedenen Gehäuseseiten des Ventilgehäuses (31) liegen und der Übergang zwischen den Austrittsmündungen und den grundkörperseitgen Fluidkanälen (19, 24b, 26, 28b) mittels Dichtelementen (50) abgedichtet ist.

4. Ventileinrichtung nach einem der Ansprüche 2 oder 3, **dadurch gekennzeichnet, dass** das Ventilgehäuse (31) eine weitere längliche Gehäuseausnehmung (34b) aufweist, in die ebenfalls im Ventilgehäuse (31) ausgebildete Fluidkanalabschnitte einmünden, wobei in den beiden Gehäuseausnehmungen (34a, 34b) wahlweise jeweils ein Hilfsventilglied (32) zum Einsatz an einem doppelseitig angesteuerten Hauptventil (13) oder ein Hilfsventilglied (32) und ein Blindglied (58) zum Einsatz an einem einseitig angesteuerten Hauptventil (13) eingesetzt sind.

5. Ventileinrichtung nach einem der vorhergegehenden Ansprüche, **dadurch gekennzeichnet, dass** das Hilfsventilglied (32) stößelartig ausgestaltet ist, mit einem Betätigungsabschnitt (53), der über eine Austrittsöffnung (60) aus dem Ventilgehäuse (31) herausragt und dort über eine dem Hilfsventilglied (32) zugeordnete Rückstellfeder (54) in dieser Position gehalten ist, wobei das Betätigungsglied (33) zum Schalten des Hilfsventilglieds (32) in die Arbeitsstellung an den Betätigungsabschnitt (53) angreift und diesen gegen die Kraft der Rückstellfeder (54) nach innen drückt.

6. Ventileinrichtung nach einem der vorhergehenden Ansprüche **dadurch gekennzeichnet, dass** der Betätigungsschieber verschieblich in einer im Ventilgehäuse (31) ausgebildeten Lagerausnehmung (55) angeordnet ist.

7. Ventileinrichtung nach einem der vorhergehenden Ansprüche, **dadurch gekennzeichnet, dass** sich die Aufnahme (30) im Grundkörper (12) in Richtung einer Stirnseite (43) des Grundkörpers (12) keilartig verbreitert und das Ventilgehäuse (31) korrespondierend hierzu keilartig ausgestaltet ist.

8. Ventileinrichtung nach einem der vorhergehenden Ansprüche, **dadurch gekennzeichnet, dass** das Ventilgehäuse (31) einen in die Aufnahme (30) am Grundkörper (12) eingesetzten, das Hilfsventilglied (32) aufweisenden Basisabschnitt (41) und einen quer zu einer Einsetzrichtung in die Aufnahme (30) verlaufenden, an den Basisabschnitt (41) angesetzten Blendenabschnitt (42) aufweist, der an der Stirnseite (43) des Grundkörpers (12) in Anlage ist.

## Claims

1. Valve device with at least one base body (12), with at least one location (30) in which is mounted a manual auxiliary actuating device (25) which has an auxiliary valve (29) with a valve casing (31) inserted in the location (30) and at least one auxiliary valve member (32) mounted in the valve casing (31), together with a manually actuable actuating element (33) in driving connection with the auxiliary valve member (32), wherein the auxiliary valve member (32) may be switched by means of the actuating element (33) between a normal position and an operating position supplying an assigned main valve (13) with pressure medium while bypassing a pilot valve (70) assigned to the main valve (13), wherein the actuating element (33) is mounted on the base body (12) to form with the auxiliary valve (29) a standard mountable unit, wherein the actuating element (33) is formed by an actuating slide which is guided by guide means, with linear movement on the valve casing (31), between a first operating position corresponding with the normal position of the axiliary valve member (32) and a second operating position corresponding with the operating position of the auxiliary valve member (32), wherein the actuating element (33) has pressure-loading means (57) which, during the transfer between the two operating positions, cause the auxiliary valve member (32) to switch between the normal position and the operating position, **characterised in that** the pressure-loading means (57) have an inclined surface which, in a first switching direction from the first operating position into the second operating position of the actuating element (33), inclines away from the valve casing (31) in such a way that, in switching of the actuating element (33) into the second operating position, the auxiliary valve member (32) is switched into the operating position.

2. Valve device according to claim 1, **characterised in that** the valve casing (31) has at least one long casing recess (34a, 34b) bounded on the peripheral-side by a valve casing wall and with a recess longitudinal axis (35a, 35b) in which the auxiliary valve member (32) is guided with linear movement facility, wherein several fluid passage sections (37, 38, 39, 40) formed in the valve casing (31) at right-angles to the recess longitudinal axis (35a, 35b) open out into the casing recess (34a, 34b) and at the other end open out outside the casing by means of outlet openings, and each correspond with fluid passages (19, 24b, 26, 28b) formed in the base body (12).

3. Valve device according to claim 2, **characterised in that** the outlet openings of the fluid passage sections (37, 38, 39, 40) lie on different casing sides of the valve casing (31), and the transition between the outlet openings and the base-body-side fluid passages (19, 24b, 26, 28b) is sealed by sealing elements (50).

4. Valve device according to one of claims 2 or 3, **characterised in that** the valve casing (31) has a further long casing recess (34b) into which there also lead fluid passage sections formed in the valve casing (31), wherein in the two casing recesses (34a, 34b) there are inserted alternately in each case an auxiliary valve member (32) for use on a main valve (13) controlled on two sides, or an auxiliary valve member (32) and a blank element (58) for use on a main valve (13) controlled on one side.

5. Valve device according to any of the preceding claims, **characterised in that** the auxiliary valve member (32) is designed in the manner of a tappet, with an actuating section (53) extending out of the valve casing (31) through an outlet opening (60) and held in this position by a restoring spring (54) assigned to the auxiliary valve member (32), wherein the actuating element (33) acts on the actuating section (53), pressing it inwards against the force of the restoring spring (54), to switch the auxiliary valve member (32) into the operating position.

6. Valve device according to any of the preceding claims, **characterised in that** the actuating slide is mounted movably in a bearing recess (55) formed in the valve casing (31).

7. Valve device according to any of the preceding claims, **characterised in that** the location (30) in the base body (12) widens in a wedge-like manner towards one end face (43) of the base body (12) and the valve casing (31) has a corresponding wedge-shape.

8. Valve device according to any of the preceding claims, **characterised in that** the valve casing (31) has a base section (41), which has the auxiliary valve member (32), inserted in the location (30) on the base body (12), and a cover section (42) attached to the base section (41) and running at right-angles to a direction of insertion into the location (30), and which fits up against the end face (43) of the base body (12).

## Revendications

1. Système de soupape, avec au moins un corps de base (12) doté d'au moins un logement (30), dans lequel est disposé un dispositif d'actionnement auxiliaire manuel (25) qui présente une soupape auxiliaire (29) avec un boîtier de soupape (31) inséré dans le logement (30) et au moins un organe de soupape auxiliaire (32) logé dans le boîtier de soupape (31) ainsi qu'un organe d'actionnement (33) actionnable manuellement, se trouvant en liaison d'entraînement avec l'organe de soupape auxiliaire (32), sachant que l'organe de soupape auxiliaire (32) peut être commuté à l'aide de l'organe d'actionnement (33) entre une position de base et une position de travail alimentant en agent de pressurisation une soupape principale associée (13) en contournant une soupape de précommande (70) associée à la soupape principale (13), sachant que l'organe d'actionnement (33) est disposé sur le corps de base (12) en formant une unité structurelle pouvant être montée uniformément avec la soupape auxiliaire (29), sachant que l'organe d'actionnement (33) est formé par un coulisseau d'actionnement qui est guidé de manière mobile linéairement sur le boîtier de soupape (31) à l'aide de moyens de guidage entre une première position de commutation correspondant à la position de base de l'organe de soupape auxiliaire (32) et une seconde position de commutation correspondant à la position de travail de l'organe de soupape auxiliaire (32), sachant que l'organe d'actionnement (33) présente des moyens d'alimentation (57) qui amènent l'organe de soupape auxiliaire (32) lors du passage entre les deux positions de commutation à commuter entre la position de base et la position de travail, **caractérisé en ce que** les moyens d'alimentation (57) présentent une surface en biais qui s'incline dans un premier sens de commutation de la première position de commutation à la seconde position de commutation de l'organe d'actionnement (33) loin du boîtier de soupape (31) de telle manière que l'organe de soupape auxiliaire (32) soit commuté dans la position de travail lors de la commutation de l'organe d'actionnement (33) dans la seconde position de commutation.

2. Système de soupape selon la revendication 1, **caractérisé en ce que** le boîtier de soupape (31) présente au moins un évidement de boîtier (34a, 34b) oblong délimité côté périphérie par une paroi de boîtier de soupape avec un axe longitudinal d'évidement (35a, 35b), dans lequel l'organe de soupape auxiliaire (32) est guidé de manière mobile linéairement, sachant que plusieurs sections de canal fluidique (37, 38, 39, 40) réalisées transversalement à l'axe longitudinal d'évidement (35a, 35b) dans le boîtier de soupape (31) débouchent dans l'évidement de boîtier (34a, 34b), lesquelles sections débouchent d'autre part à l'aide d'ouvertures de sortie côté extérieur du boîtier et correspondent respectivement aux canaux fluidiques (19, 24b, 26, 28b) réalisés dans le corps de base (12).

3. Système de soupape selon la revendication 2, **caractérisé en ce que** les ouvertures de sortie des sections de canal fluidique (37, 38, 39, 40, 48) se situent sur différents côtés du boîtier de soupape (31) et la transition entre les ouvertures de sortie et les canaux fluidiques (19 24b, 26, 25b) côté corps de base est rendue étanche à l'aide d'éléments étanches (50).

4. Système de soupape selon l'une quelconque des revendications 2 ou 3, **caractérisé en ce que** le boîtier de soupape (31) présente un autre évidement de boîtier (34b) oblong, dans lequel débouchent des sections de canal fluidique réalisées aussi dans le boîtier de soupape (31), sachant que dans les deux évidements de boîtier (34a, 34b), au choix respectivement un organe de soupape auxiliaire (32) est inséré pour être utilisé sur une soupape principale (13) commandée des deux côtés ou un organe de soupape auxiliaire (32) et un organe aveugle (58) sont insérés pour être utilisés sur une soupape principale (13) commandée d'un seul côté.

5. Système de soupape selon l'une quelconque des revendications précédentes, **caractérisé en ce que** l'organe de soupape auxiliaire (32) est configuré comme un poussoir, avec une section d'actionnement (53) qui dépasse au-dessus d'une ouverture de sortie (60) du boîtier de soupape (31) et y est maintenue dans cette position par un ressort de rappel (54) associé à l'organe de soupape auxiliaire (32), sachant que l'organe d'actionnement (33) agit sur la section d'actionnement (53) pour la commutation de l'organe de soupape auxiliaire (32) dans la position de travail et presse celle-ci vers l'intérieur contre la force du ressort de rappel (54).

6. Système de soupape selon l'une quelconque des revendications précédentes, **caractérisé en ce que** le coulisseau d'actionnement est disposé de manière mobile dans un évidement de palier (55) réalisé dans le boîtier de soupape (31).

7. Système de soupape selon l'une quelconque des revendications précédentes, **caractérisé en ce que** le logement (30) dans le corps de base (12) est élargi en forme de clavette en direction d'un côté frontal (43) du corps de base (12) et le boîtier de soupape (31) est configuré en forme de clavette de manière correspondante.

8. Système de soupape selon l'une quelconque des revendications précédentes, **caractérisé en ce que** le boîtier de soupape (31) présente une section de base (41) présentant l'organe de soupape auxiliaire (32), insérée dans le logement (30) sur le corps de base (12) et une section d'obturation (42) placée sur la section de base (41), s'étendant transversalement à un sens d'insertion dans le logement (30), laquelle section est en appui sur le côté frontale (43) du corps de base (12).
